(19) **Europäisches Patentamt**

**European Patent Office**

**Office européen des brevets**

(11) Publication number: **0 319 348 B1**

(12) **EUROPEAN PATENT SPECIFICATION**

(45) Date of publication of patent specification: **11.11.92**   (51) Int. Cl.⁵: **B67D 1/00**, B67D 1/06

(21) Application number: **88311501.6**

(22) Date of filing: **05.12.88**

(54) **Convertible beverage dispenser.**

(30) Priority: **04.12.87 US 129032**

(43) Date of publication of application:
**07.06.89 Bulletin  89/23**

(45) Publication of the grant of the patent:
**11.11.92 Bulletin  92/46**

(84) Designated Contracting States:
**AT BE CH DE ES FR GB GR IT LI LU NL SE**

(56) References cited:
**DE-A- 2 243 882**
**DE-A- 2 308 337**
**DE-A- 3 346 240**

(73) Proprietor: **THE COCA-COLA COMPANY**
**310 North Avenue**
**Atlanta, Georgia 30313(US)**

(72) Inventor: **Credle, William S., Jr.**
**1763 East Gate Trail**
**Stone Mountain Georgia 30087(US)**

(74) Representative: **Davies, Christopher Robert et al**
**Frank B. Dehn & Co. Imperial House 15-19 Kingsway**
**London WC2B 6UZ(GB)**

Rank Xerox (UK) Business Services

**Description**

This invention relates to counter top, postmix beverage dispensers, and in particular to a low-cost, compact, versatile, multiflavor, convertible beverage dispenser.

A wide variety of different postmix dispensers are known, including those having multiflavor valves and those having the selector buttons and nozzle at a notched corner of the cabinet. It is also known to have a dispensing system in which some parts of the dispenser are located above the counter and some parts are located below the counter.

Viewed from one aspect the invention provides a unitary, convertible postmix beverage dispenser comprising:

(a) a refrigeration module and a separate dispense module, said refrigeration module having a refrigeration module housing and said dispense module having a dispense module housing;

(b) removable connecting means for connecting said housings together to operate as a one-piece unit and for separating said housings from each other to operate as a two-piece unit;

(c) means for connecting a water line in said refrigeration module to a water line in said dispense module;

(d) means for connecting a syrup line in said refrigeration module to a syrup line in said dispense module;

(e) said refrigeration module including a refrigeration unit; and

(f) said dispense module including a dispensing valve and a dispensing nozzle for dispensing a beverage therefrom.

At least in preferred embodiments the invention provides a unitary beverage dispenser which can be placed entirely on top of a counter and oriented either frontways or sideways or which can be easily separated into a refrigeration module placed below the counter and a small dispense module placed on top of the counter.

A preferred embodiment of the invention provides a compact, multiflavor, low cost, versatile, convertible postmix beverage dispenser.

Preferably, the beverage dispenser can be easily modified to dispense different numbers of beverages.

Another aspect of the invention provides an improved flow control module and method for easily changing the numbers of beverages to be dispensed.

A preferred arrangement includes a dispenser with two fronts, which can be placed frontways or sideways, and having a small detachable dispense module which can be placed by itself on top of a counter.

The preferred dispenser can be delivered to an outlet and will fit in almost any available space, and is versatile in that it can be used to reduce the need for an inventory of dispensers of different sizes and shapes.

Certain embodiments of the invention will now be described, by way of example only, with reference to the accompanying drawings, in which:

Fig. 1 is a perspective view of the preferred embodiment of the convertible dispenser of the present invention set up in its "frontways" mode of operation;

Fig. 2 is a view identical to Fig. 1 but, with the dispenser set up in its "sideways" mode of operation;

Fig. 3 is a perspective view of the dispenser of Fig. 1 set up with only its narrow dispense module on top of the counter and with the refrigeration module beneath the counter;

Fig. 4 is an exploded, partly broken-away, perspective view of the dispenser of Fig. 1;

Fig. 5 is a partly cross-sectional side view of the convertible dispenser of Fig. 1;

Fig. 6 is a partly cross-sectional, partial side view of the dispenser of Fig. 1;

Fig. 7 is a partly broken-away perspective view of the dispense module showing how it is converted to the Fig. 3 mode of operation;

Fig. 8 is a cross-sectional view through the flow control module of this invention;

Fig. 9 is a diagrammatic view showing the water connection when the dispense module is connected to the refrigeration module;

Fig. 10 is a diagrammatic view showing the water connection when the dispense module is separated from the refrigeration module;

Fig. 11 is a perspective view similar to Fig. 3 but of another embodiment that requires much less space;

Fig. 12 is a front view of the dispense module according to a still further embodiment of this invention.

A low cost, compact, versatile, multiflavor, postmix, convertible beverage dispenser which can be oriented in any one of several different ways to fit into any available space in an outlet. If an outlet has room for a dispenser, this dispenser will fit. This advantage can be used to reduce the inventory of different sizes of dispensers presently needed to accommodate different outlets.

This dispenser can be oriented frontways or sideways by an easy change in the location of the selector buttons. Alternatively, this unitary dispenser can be separated into a dispense module and a refrigeration module. The refrigeration module can be located below the counter and the dispense module can fit into a very small place on a counter.

This convertible dispenser can be used with figals or can be used with bag-in-box with built-in syrup pumps. In addition, this convertible dispenser can be easily modified to dispense different numbers of beverages.

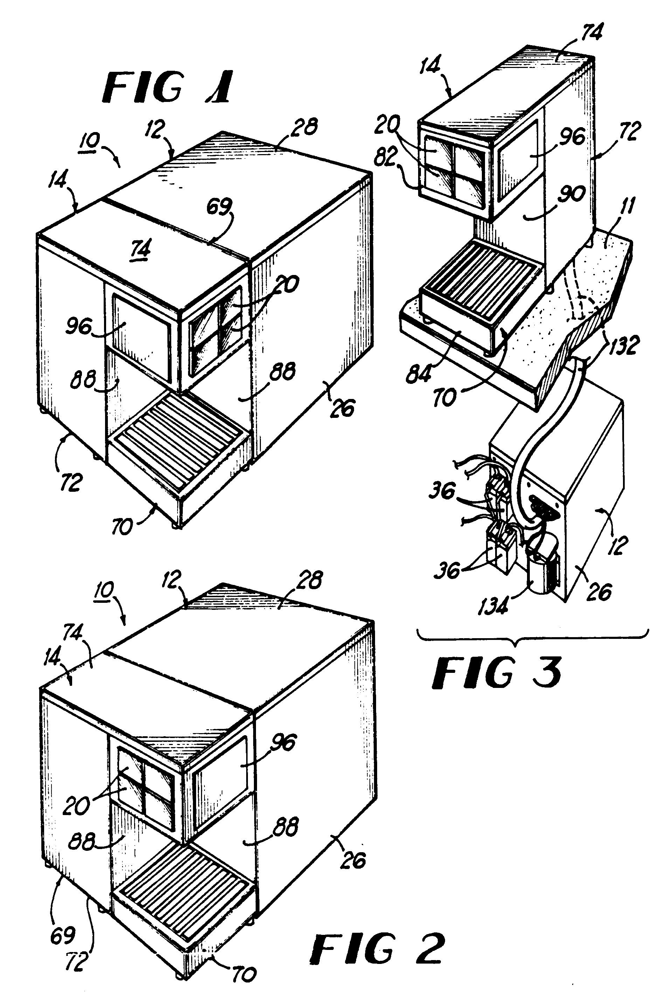

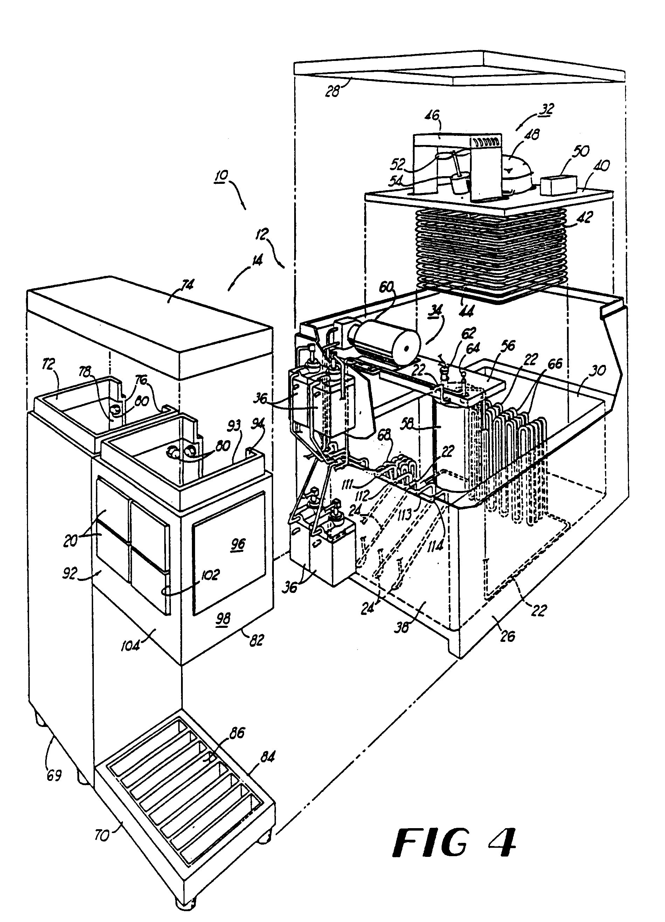

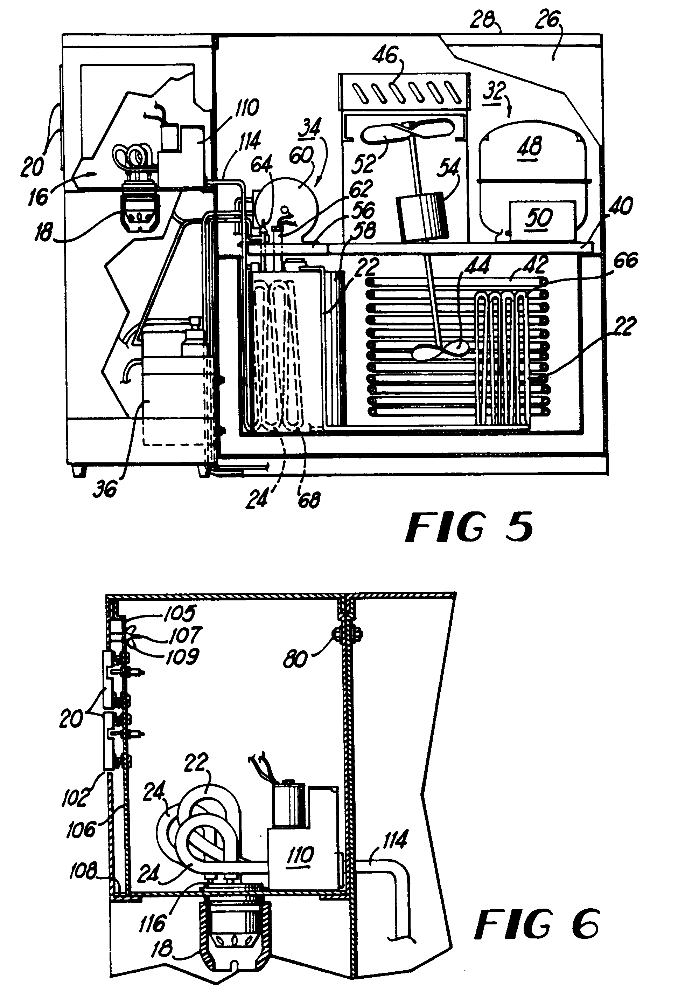

With reference now to the drawings, Figs. 1-10 show the preferred embodiment of the convertible beverage dispenser 10 of the present invention.

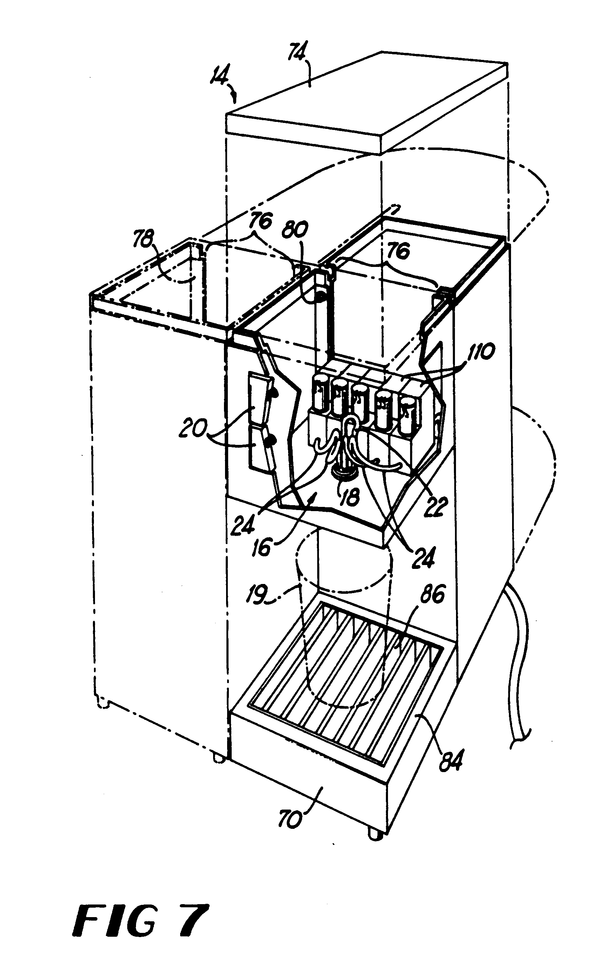

The dispenser 10 includes a refrigeration module 12 and a separate dispense module 14 which is removably attached to the refrigeration module. In the preferred embodiment shown, the dispenser 10 has a single multiflavor valve 16 with a single mixing and dispensing nozzle 18 for dispensing a beverage into a cup 19 (Fig. 7), four selector buttons 20, one carbonated water line 22 and four syrup lines 24. The dispensing valve 16 is in a notched corner of the dispenser 10 with the buttons on either of the adjacent walls.

The dispenser 10 as shown in the drawings is set up for use with bag-in-box syrup containers (not shown), although it can also be used with figals (not shown).

The dispenser 10 can be set up for operation on a countertop 11 (see Fig. 3) in any one of the three modes of operation shown in Figs. 1, 2 or 3. To convert between the modes shown in Figs. 1 and 2, it is only necessary to move the buttons 20 to change places with the panel 96. To convert from either the Fig. 1 or 2 mode to the Fig. 3 mode, a small conversion kit is used. The dispense module 14 is separated from the refrigeration module 12 and slightly rearranged (Fig. 7), the longer water and syrup lines are attached, a different splash plate (flat instead of L-shaped) is attached, and preferably a recirculating pump 134 and line are connected.

The refrigeration module 12 includes a housing 26, a lid 28, an ice-water tank 30, a refrigeration unit 32, a carbonator unit 34, and four syrup pumps 36 mounted on the sidewall 38.

The refrigeration unit 32 is mounted on a refrigeration deck 40 that sits on top of the tank 30. The unit 32 includes the usual equipment such as an evaporator coil 42, an agitator 44, condenser coils 46, compressor 48, ice bank control 50, and cooling fan 52 operated by an agitator motor 54,

The carbonator unit 34 is mounted on a carbonator deck 56 and includes the usual carbonator equipment including a carbonator tank 58, a water pump and motor 60, level controller 62, and $CO_2$ inlet 64.

The refrigeration module 12 also includes the usual water cooling coils 66 and four separate syrup cooling coils 68. The water goes to the pump 60, then to the water cooling coils 66, then to the carbonator tank 58 and then to the multiflavor valve 16. The syrup goes from a bag-in-box container (not shown) to one of the four syrup pumps 36, to a syrup cooling coil 68, and then to the multiflavor valve 16. Each pump 36 has a $CO_2$ inlet, a syrup inlet and a syrup outlet, for example, for a $CO_2$ operated pump.

The dispense module 14 has a longer sidewall and shorter frontwall and includes a dispense module housing 69, a dispense section 70, a separate hollow section 72, and a lid 74. The hollow section 72 is generally U-shaped with an opening 76 in its rear wall 78 to accommodate the syrup pumps 36, in the modes of operation shown in Figs. 1 and 2. The hollow section 72 is attached by bolts and nuts 80 to the refrigeration module housing 26.

The dispense section 70 includes separate upper and lower portions 82 and 84, respectively, and an L-shaped splash guard 88 in Figs. 1 and 2, and a flat splash guard 90 in Fig. 3. The lower portion 84 is the drip tray 86 which, in Figs. 1 and 2, is preferably connected to the hollow section 72 and not to the refrigeration module 12.

The upper portion 82 includes a shell 92 having an open top 93 and an open rear wall 94. The shell 92 is bolted to both the refrigeration module housing 26 and to the hollow section 72 by bolts and nuts 80.

The upper portion 82 includes the selector buttons 20, a panel 96, and the single multiflavor valve 16. In the arrangement of Fig. 1 when the dispenser 10 is arranged frontways, the selector buttons 20 are placed in an opening 100 in a frontwall 98 of the dispense module 14, and the panel 96 is placed in an opening 102 in the sidewall 104. In the mode of operation shown in Fig. 2, the selector buttons 20 are placed in the sidewall opening 102 and the panel 96 is placed in the frontwall opening 100. In the separated arrangement of Fig. 3, the selector buttons 20 are placed in the sidewall opening 102 as in Fig. 2.

The manner of changing the selector buttons 20 and panel 96 will now be described. The openings 100 and 102 are identical in size and the buttons and panel can be handled through the open top 93 (with the lid 74 off). Each of the panel and buttons are connected to an identical mounting plate 106, so a description of one will suffice. The plate 106 has a flange 108 along its bottom edge that fits in a groove, and the plate has a single slot 105 centrally located in its top edge to receive a bolt 107 connected to the wall and on which a wing nut 109 is attached. The wires from the solenoids of the flow control modules 110 to the buttons 20 are flexible and easily allow movement of the buttons from one wall to the other.

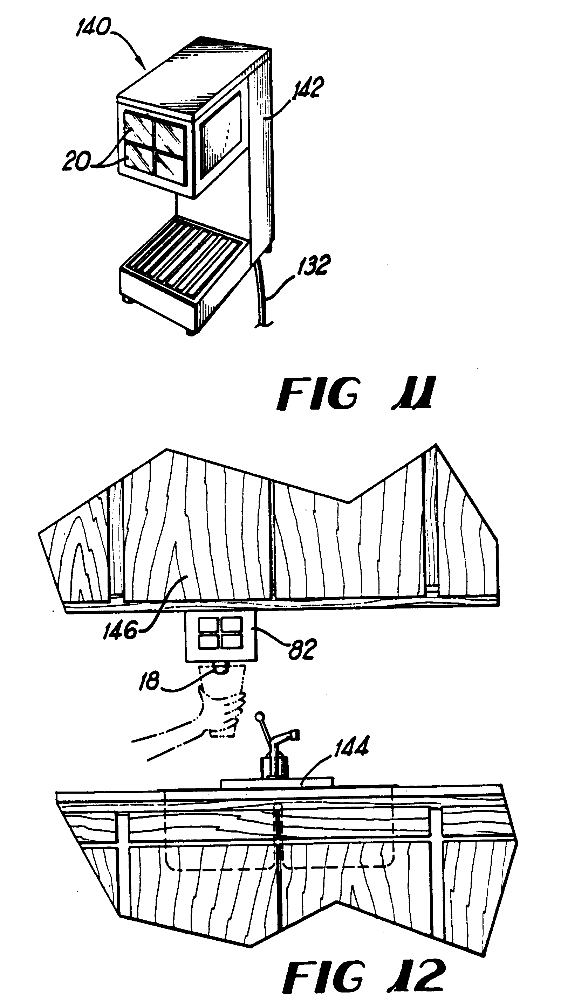

The multiflavor valve 16 will now be described. The valve 16 includes the single nozzle 18 and a plurality of separate, identical flow control modules 110, shown in Fig. 10. One of the flow control modules 110 is for carbonated water an there are four separate syrup modules 110, one for each of four syrups. A water line 112 extends from the water flow control module 110 to a central opening in the nozzle 18, while the four syrup lines 111, 112, 113, and 114 extend from a respective one of the flow control modules 110 to a respective one of the circumferentially arranged openings 116 in the top of the nozzle 18.

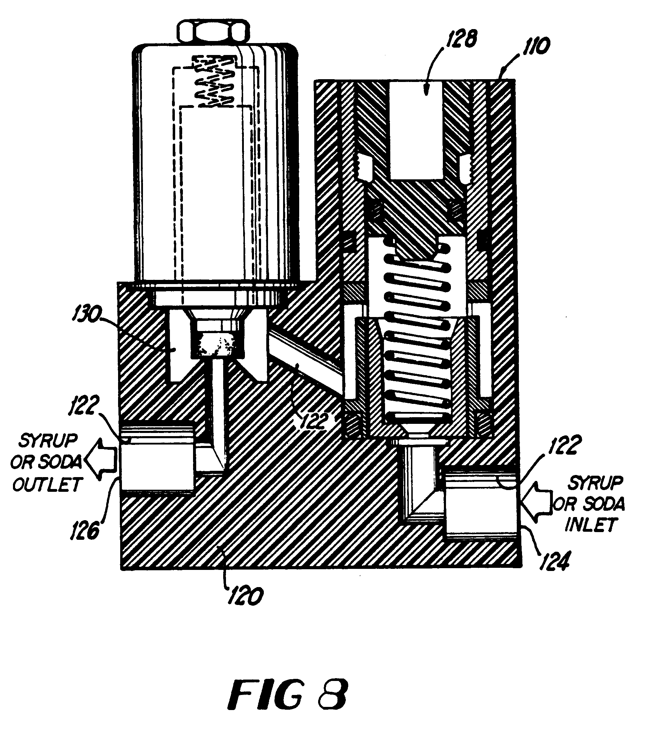

Referring to Fig. 8, each of the flow control modules 110 includes a body 120 and a liquid passageway 122 therethrough from an inlet port 124 to an outlet port 126. A standard piston-spring flow control 128 is located in the passage. A solenoid controlled valve 130 (including a solenoid, an armature, and a valve element movable onto and off of a valve seat) controls the on-off flow through the module 110. An advantage of this module is the fact that the inlet and outlet ports are on opposite faces and have passageways whose axes are parallel, to provide ease of installation.

The operation of the two arrangements shown in Figs. 1 and 2 will thus be clear from the above description. If only a very small countertop space is available, then the dispenser 10 can be converted to a two-piece unit shown in Fig. 3 with only the very narrow dispense module placed on top of the countertop 11.

This conversion from a one to two-piece unit can be easily done in the field with the aid of a small break-away conversion kit containing the long water and syrup lines 132, a recirculating water pump 134 to be mounted on the refrigerator module housing 26, and a flat splash plate 90. To do the conversion, the lids are removed, the bolts and nuts 80 are removed, the recirculating water pump 134 is mounted on the housing 26, and the lines 132 are installed. In addition, the two sections 70 and 72 of the dispense unit are disconnected and then re-connected, using bolts and nuts 80 as shown in Fig. 10. In this way, the openings in their rear walls are facing each other and the dispense module has a smooth, clean, exterior surface. The drip tray is not connected to the shell 92, but it is connected to a drip tray support that is connected to the hollow section 72 and that extends under both sections 70 and 72 of the dispense module as shown in Figs. 1 and 2. This support is disconnected from the hollow section 70 and then reconnected to extend under the drip tray in Fig. 3.

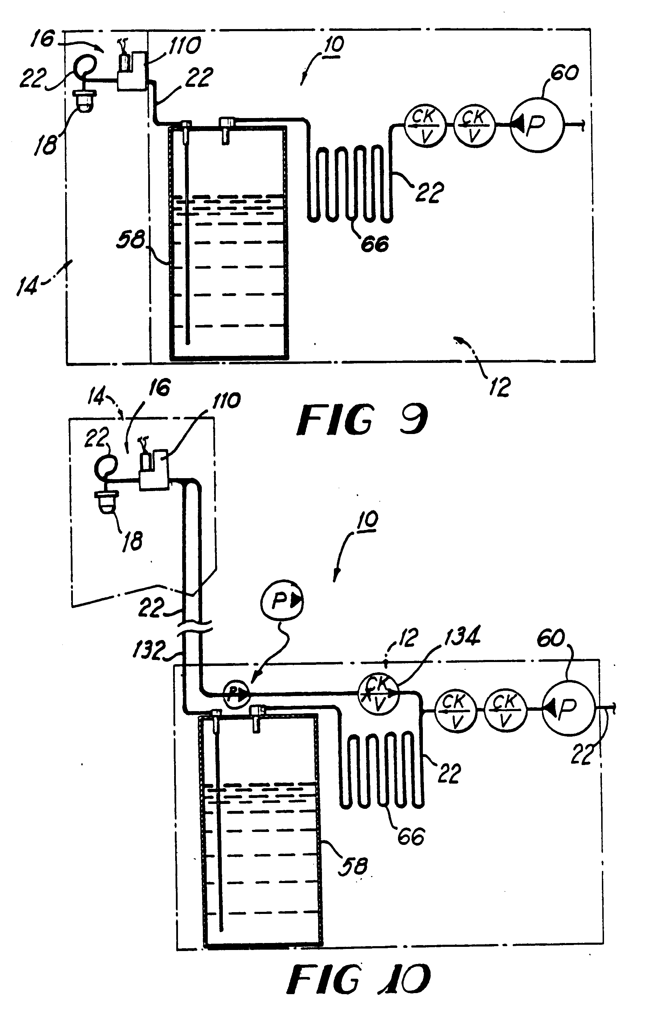

Fig. 9 shows the standard set up for the water line for the Figs. 1 and 2 modes of operation, and Fig. 10 shows the additional recirculating water line set up for the Fig. 3 mode of operation. This provides cold water for the dispenser at all times.

Fig. 11 shows a dispense module 140 according to another embodiment of this invention similar to Fig. 3 except that the hollow section 72 is replaced (along with a different lid and drip tray support) with a different hollow section 142 having much less depth than does section 72. This embodiment would be used where only a very small countertop space is available.

Fig. 12 shows another embodiment of this invention wherein the upper portion 82 of the dispense section 70 of the dispense module 14 is used by itself, by connecting it above a sink, such as under an existing cabinet (it can alternatively be wall mounted).

While the preferred embodiment of this invention has been described above in detail, it is to be understood that variations and modifications can be made therein without departing from the scope of the present invention. For example, while the preferred embodiment described above uses a multiflavor valve, this is not essential; it can alternatively use separate dispensing valves for each beverage or any combination of multiflavor and separate valves. In addition, while the preferred embodiment has been described for use with bag-in-box, it can also be used with figals, in which case the syrup pumps would not be included. The dispenser has been described for use with four separate syrups; this number can easily be changed by changing the number of flow control modules and syrup cooling coils. Other types and arrangements of the selector buttons can also be used. Instead of moving the buttons in switching between the Figs. 1 and 2 arrangements, buttons can be located permanently in both places, with a cover over the ones not being used. As used herein, the term "convertible" means a dispenser that can be converted in size and shape to fit in different available spaces. In addition, when converting to the Fig. 3 mode, or preferably to the Fig. 11 mode, the hollow section 142 can be part of the dispense section with a hollow section like 72 left connected to the refrigeration module. Also, the long lines can be stored in the hollow section 72. This would make the conversion easier and could avoid the need for a conversion kit.

## Claims

1. A unitary, convertible postmix beverage dispenser (10) comprising:

(a) a refrigeration module (12) and a separate dispense module (14;140), said refrigeration module (12) having a refrigeration module housing (26) and said dispense module (14;140) having a dispense module housing (69);

(b) removable connecting means (80) for connecting said housings (26,69) together to operate as a one-piece unit and for separating said housings (26,69) from each other to operate as a two-piece unit;

(c) means (132) for connecting a water line in said refrigeration module (12) to a water line (22) in said dispense module (14;140);

(d) means (132) for connecting a syrup line in said refrigeration module (12) to a syrup line in said dispense module (14;140);

(e) said refrigeration module (12) including a refrigeration unit (32); and

(f) said dispense module (70) including a dispensing valve (16) and a dispensing nozzle (18) for dispensing a beverage therefrom.

2. The apparatus as recited in claim 1 wherein said refrigeration module (12) includes a carbonation unit (34).

3. The apparatus as recited in claim 1 or 2 wherein said dispense module (70) includes manual means for activating said dispensing valve (16) to dispense a beverage.

4. The apparatus as recited in claim 3 wherein said manual means includes a selector button (20).

5. The apparatus as recited in any preceding claim wherein said housings (26,69) are separated and wherein said water line connecting means and said syrup line connecting means are long, flexible lines (132) such that said refrigeration module (12) can be placed below a counter and said dispense module (14;140) can be placed above said counter.

6. The apparatus as recited in any preceding claim wherein said syrup line connecting means (132) includes a plurality of syrup lines, and wherein said dispense module includes a plurality of selector buttons (20).

7. The apparatus as recited in any preceding claim wherein said syrup line connecting means (132) includes a plurality of syrup lines, and wherein said dispensing valve is a multiflavor valve (16).

8. The apparatus as recited in claim 7 wherein said multiflavor valve (16) includes a single mixing nozzle (18) and a plurality of separate flow control modules (110), each flow control module (110) including a solenoid controlled on-off valve (130) and a flow control (128).

9. The apparatus as recited in any preceding claim wherein said housings (26,69) are adapted to be removably connected together and said water line and syrup line connecting means are mating fittings on the respective water and syrup lines in the refrigeration (12) and dispense (14) modules.

10. The apparatus as recited in any preceding claim wherein said refrigeration module (12) includes a built-in syrup pump (36).

11. The apparatus as recited in claim 10 including a plurality of said built-in syrup pumps (36).

12. The apparatus as recited in any preceding claim wherein said dispense module (14) includes a dispense section (70) and a hollow section (72), said sections each having a rear wall facing said refrigeration module when said housings are connected together, said rear walls having openings therein and means (80) for connecting said sections (70,72) together with said rear walls facing each other when said housings are separated, whereby said openings are hidden in said separated dispense module (14).

13. The apparatus as recited in any of claims 4 to 12 including means for changing the number of selector buttons (29) and syrup lines.

14. The apparatus as recited in any of claims 4 to 13 wherein said dispense module (14) includes a longer sidewall and a shorter frontwall, and including means for locating said selector button (20) on either side sidewall or said frontwall.

15. The apparatus of any of claims 4 to 13 wherein said dispenser has a notched corner dispensing station, said dispenser has a longer frontwall (98) and a narrower sidewall (104), said housings are connected together and said selector button (20) is on said frontwall (98) adjacent said notched corner dispensing station.

16. The apparatus of any preceding claim further comprising a flow control module (110) comprising:

(a) a body (120) having a liquid flow passageway (122) therethrough from an inlet port (124) to an outlet port (126);

(b) a flow control chamber in said body (120) with a piston-spring flow control element (128) therein, said chamber having an inlet and an outlet in said passageway (122);

(c) a control valve chamber in said body (120) in fluid communication with said passageway, a valve element adapted to seat on a valve seat, and a solenoid mounted on said body and having an armature connected to said valve element, for controlling the on-off flow through said flow control module (110); and
(d) said inlet port (124) and outlet port (126) being on opposite faces of said body (120) and having parallel axes.

**Patentansprüche**

1. Einheitlicher, umrüstbarer Spender (10) für nachträglich gemischte Getränke, welcher aufweist:
(a) ein Kühlmodul (12) und ein gesondertes Ausgabemodul (14; 140), wobei das Kühlmodul (12) ein Kühlmodulgehäuse (26) hat und das Ausgabemodul (14; 140) ein Ausgabemodulgehäuse (69) hat;
(b) eine lösbare Verbindungseinrichtung (80) zum Verbinden der Gehäuse (26, 69) miteinander, so daß sie als eine einteilige Einheit arbeiten und zum Lösen der Gehäuse (26, 69) voneinander, so daß sie als eine zweiteilige Einheit arbeiten;
(c) eine Einrichtung (32) zum Verbinden einer Wasserleitung mit einem Kühlmodul (12) mit einer Wasserleitung (22) in dem Ausgabemodul (14; 140);
(d) eine Einrichtung (132) zum Verbinden einer Sirupleitung in dem Kühlmodul (12) mit einer Sirupleitung in dem Ausgabemodul (14; 140);
(e) das Kühlmodul (12) eine Kühleinheit (32) umfaßt; und
(f) das Ausgabemodul (70) ein Ausgabeventil (16) und eine Ausgabedüse (18) zur Ausgabe eines Getränkes von demselben umfaßt.

2. Vorrichtung nach Anspruch 1, bei der das Kühlmodul (14) eine Karbonisiereinheit (34) umfaßt.

3. Vorrichtung nach Anspruch 1 oder 2, bei der das Ausgabemodul (70) eine Handeinrichtung zur Aktivierung des Ausgabeventils (16) zur Ausgabe eines Getränkes umfaßt.

4. Vorrichtung nach Anspruch 3, bei der die Handeinrichtung eine Wähltaste (20) umfaßt.

5. Vorrichtung nach einem der vorangehenden Ansprüche, bei der die Gehäuse (26, 69) getrennt sind und bei der die Wasserleitungs-Verbindungseinrichtung und die Sirupleitungs-Verbindungseinrichtung lange, flexible Leitungen (132) derart sind, daß das Kühlmodul (12) unterhalb einer Theke und das Ausgabemodul (14; 140) auf der Theke angeordnet werden kann.

6. Vorrichtung nach einem der vorangehenden Ansprüche, bei der die Sirupleitungs-Verbindungseinrichtung (132) eine Mehrzahl von Sirupleitungen umfaßt, und bei der das Ausgabemodul eine Mehrzahl von Wähltasten (20) umfaßt.

7. Vorrichtung nach einem der vorangehenden Ansprüche, bei der die Sirupleitungs-Verbindungseinrichtung (132) eine Mehrzahl von Sirupleitungen umfaßt, und bei der das Ausgabeventil ein Mehrgeschmacks-Ventil (16) ist.

8. Vorrichtung nach Anspruch 7, bei der das Mehrgeschmacksventil (16) eine einzige Mischdüse (18) und eine Mehrzahl von gesonderten Flußsteuerungsmodule (110) umfaßt, wobei jedes Flußsteuermodul (110) ein magnetgesteuertes Ein/Aus-Ventil (130) und eine Flußsteuerung (128) umfaßt.

9. Vorrichtung nach einem der vorangehenden Ansprüche, bei der die Gehäuse (26, 69) derart ausgelegt sind, daß sie lösbar miteinander verbunden werden können, und daß die Wasserleitungs- und Sirupleitungs-Verbindungseinrichtungen Paßanschlüsse an den zugeordneten Wasser- und Sirupleitungen in den Kühl- (12) und Ausgabe- (14) Module haben.

10. Vorrichtung nach einem der vorangehenden Ansprüche, bei der das Kühlmodul (12) eine eingebaute Siruppumpe (36) umfaßt.

11. Vorrichtung nach Anspruch 10, welche eine Mehrzahl von eingebauten Siruppumpen (36) umfaßt.

12. Vorrichtung nach einem der vorangehenden Ansprüche, bei der das Ausgabemodul (14) ein Ausgabeteil (70) und ein hohles Teil (72) umfaßt, die Teile jeweils eine Rückwand haben, die dem Kühlmodul zugewandt sind, wenn die Gehäuse miteinander verbunden sind, die Rückwände Öffnungen darin haben und Einrichtungen (80) zum Verbinden der Teile (70, 72) mit den einander zugewandten Rückwänden aufweist, wenn die Gehäuse getrennt sind, wobei die Öffnungen im getrennten Ausgabemodul (14) verdeckt sind.

13. Vorrichtung nach einem der Ansprüche 4 bis 12, welche Einrichtungen zum Verändern der Anzahl der Wähltasten (29) und der Sirupleitungen umfaßt.

**14.** Vorrichtung nach einem der Ansprüche 4 bis 13, bei der das Ausgabemodul (14) eine längere Seitenwand und eine kürzere Vorderwand umfaßt, und Einrichtungen zum Anordnen der Wähltaste (20) auf der Seitenwand oder der Vorderwand umfaßt.

**15.** Vorrichtung nach einem der Ansprüche 4 bis 13, bei der die Ausgabeeinrichtung eine mit einer Einkerbung versehene Eckausgabestation hat, die Ausgabeeinrichtung eine längere Vorderwand (98) und eine schmalere Seitenwand (104) hat, die Gehäuse miteinander verbunden sind, und die Wähltaste (20) auf der Vorderwand (98) in der Nähe der mit der Einkerbung versehenen Eckausgabestation vorgesehen ist.

**16.** Vorrichtung nach einem der vorangehenden Ansprüche, welche ferner ein Flußsteuermodul (110) aufweist, welches aufweist:

(a) einen Körper (120), welcher einen Flüssigkeitsdurchflußkanal (122) hat, welcher durch denselben von einer Einlaßöffnung (124) zu einer Auslaßöffnung (126) geht;

(b) eine Flußsteuerkammer in dem Körper (120) mit einem Kolbenfeder-Durchflußsteuerelement (128) darin, wobei die Kammer einen Einlaß und einen Auslaß in dem Durchgang (122) hat;

(c) eine Steuerventilkammer in dem Körper (120), welche in Fluidverbindung mit dem Durchgang ist, wobei ein Ventilelement vorgesehen ist, welches derart ausgelegt ist, daß es auf einem Ventilsitz sitzt, und ein Magnet an dem Körper angebracht ist und ein Anker mit dem Ventilelement zur Steuerung des Ein/Aus-Betriebs des Durchflußes durch den Flußsteuermodul (110) verbunden ist; und

(d) die Einlaßöffnung (124) und die Auslaßöffnung (126) an gegenüberliegenden Flächen des Körpers (120) vorgesehen sind und parallele Achsen haben.

**Revendications**

**1.** Un distributeur de boissons (10) unitaire, modulable, post-mélange comprenant :

a) un module de réfrigération (12) et un module de distribution (14 ; 140) séparé, ledit module de réfrigération (12) ayant un boîtier de module de réfrigération (26) et ledit module de distribution (14 ; 140) ayant un boîtier de module de distribution (69) ;

b) des moyens de raccordement (80) amovibles pour raccorder lesdits boîtiers (26, 69) ensemble pour qu'ils fonctionnent comme une unité en une pièce et pour séparer lesdits boîtiers l'un de l'autre pour qu'ils fonctionnent comme une unité en deux pièces ;

c) des moyens (132) pour raccorder un circuit d'eau dudit module de réfrigération (12) à un circuit d'eau (22) dudit module de distribution (14 ; 140) ;

d) des moyens (132) pour raccorder un circuit de sirop dudit module de réfrigération (12) à un circuit de sirop dudit module de distribution (14 ; 140) ;

e) ledit module de réfrigération (12) incluant une unité de réfrigération (32) ; et

f) ledit module de distribution (70) incluant une vanne de distribution (16) et une embouchure de distribution (18) pour la distribution de boissons à partir de celles-ci.

**2.** L'appareil selon la revendication 1 dans lequel ledit module de réfrigération (12) comprend une unité de carbonatation (34).

**3.** L'appareil selon les revendications 1 ou 2 dans lequel ledit module de distribution (70) comprend des moyens manuels pour activer ladite vanne de distribution (16) afin de distribuer une boisson.

**4.** L'appareil selon la revendication 3 dans lequel lesdits moyens manuels comprennent un bouton sélecteur (20).

**5.** L'appareil selon l'une quelconque des revendications précédentes dans lequel lesdits boîtiers (26, 69) sont séparés et dans lequel lesdits moyens de raccordement du circuit d'eau et lesdits moyens de raccordement du circuit de sirop sont des longs tuyaux flexibles (132) de telle manière que le module de réfrigération (12) puisse être placé sous un comptoir et ledit module de distribution sur ledit comptoir.

**6.** L'appareil selon l'une quelconque des revendications précédentes dans lequel lesdits moyens de raccordement du circuit de sirop (132) comprennent plusieurs circuits de sirop, et dans lequel ledit module de distribution comprend plusieurs boutons sélecteurs (20).

**7.** L'appareil selon l'une quelconque des revendications précédentes dans lequel lesdits moyens de raccordement du circuit de sirop (132) comprennent plusieurs circuits de sirop, et dans lequel ladite vanne de distribution est une vanne multiparfums (16).

**8.** L'appareil selon la revendication 7 dans lequel ladite vanne multiparfums (16) comprend une unique embouchure de mélange (18) et plusieurs modules de commande d'écoulement (110) séparés, chaque module de commande d'écoulement (110) comprenant une vanne marche-arrêt (130) commandée par un solénoïde et une commande d'écoulement (128).

9. L'appareil selon l'une quelconque des revendications précédentes dans lequel lesdits boîtiers (26, 29) sont adaptés pour être raccordés ensemble de façon amovible et lesdits moyens de raccordement du circuit d'eau et du circuit de sirop sont des raccords de tuyauterie appariés, montés sur les circuits d'eau et de sirop respectifs dans les modules de réfrigération (12) et de distribution (14).

10. L'appareil selon l'une quelconque des revendications précédentes dans lequel ledit module de réfrigération (12) comprend une pompe à sirop incorporée (36)

11. L'appareil selon la revendication 10 comprenant plusieurs desdites pompes à sirop incorporées (36).

12. L'appareil selon l'une quelconque des revendications précédentes dans lequel ledit module de distribution (14) comprend une partie de distribution (70) et une partie creuse (72), lesdites parties ayant chacune une paroi arrière faisant face audit module de réfrigération quand lesdits boîtiers sont raccordés l'un à l'autre, lesdites parois arrières comportant des ouvertures et des moyens (80) pour raccorder lesdites parties (70, 72) ensemble, lesdites parois arrières se faisant face quand lesdits boîtiers sont séparés, de sorte que lesdites ouvertures sont dissimulées à l'intérieur dudit module de distribution (14) séparé.

13. L'appareil selon l'une quelconque des revendications 4 à 12 comprenant des moyens pour changer le nombre de boutons sélecteurs (29) et de circuits de sirop.

14. L'appareil selon l'une quelconque des revendications 4 à 13 dans lequel ledit module de distribution (14) comprend une paroi latérale plus longue et une paroi frontale plus courte, et des moyens pour positionner ledit bouton sélecteur (20) soit sur la paroi latérale, soit sur la paroi frontale.

15. L'appareil selon l'une quelconque des revendications 4 à 13 dans lequel ledit distributeur a une station distributrice à coin entaillé, ledit distributeur a une paroi frontale (98) plus longue et une paroi latérale (104) plus étroite, lesdits boîtiers sont raccordés ensemble et ledit bouton sélecteur (20) est sur ladite paroi frontale (98) adjacente à ladite station distributrice à coin entaillé.

16. L'appareil de l'une quelconque des revendications précédentes comprenant un module de commande d'écoulement (110) comprenant :
    a) un corps (120) ayant un passage traversant pour l'écoulement du liquide (122) allant d'un orifice d'entrée (124) à un orifice de sortie (126);
    b) une enceinte de commande d'écoulement dans ledit corps (120) comportant un élément de commande d'écoulement (128) à ressort et piston, ladite enceinte ayant une entrée et une sortie dans ledit passage (122)
    c) une enceinte à valve de commande dans ledit corps (120) en communication fluidique avec ledit passage, un élément de vanne adapté pour s'emboîter sur un siège de soupape, et un solénoïde monté sur ledit corps et ayant une armature raccordée audit élément de vanne pour commander l'écoulement tout ou rien à travers ledit module de commande d'écoulement (110) ; et
    d) lesdits orifices d'entrée (124) et de sortie (126) étant disposés sur des faces opposées dudit corps (120) et ayant des axes parallèles.

FIG 1

FIG 2

FIG 3

FIG 4

**FIG 5**

**FIG 6**

FIG 7

**FIG 8**

FIG 9

FIG 10

14

FIG 11

FIG 12